# EUROPÄISCHE PATENTANMELDUNG

(11) **EP 2 187 505 A2**
(43) Veröffentlichungstag der Anmeldung: **19.05.2010**
(21) Anmeldenummer: 09175880.5
(22) Anmeldetag: 13.11.2009
(51) Int. Cl.: H02K 5/124

(54) **Elektromotor für Flaschenverschließer**

(30) Priorität: 18.11.2008 DE 102008057900
(71) Anmelder: Krones AG, 93073 Neutraubling (DE)
(72) Erfinder: Lang, Horst, 93092 Barbing-Auburg (DE)
(74) Vertreter: Bittner, Bernhard

(57) **Zusammenfassung**

Eine Vorrichtung zum Verschließen von Behältnissen (10) mit Verschlüssen, mit einem in einer gasförmigen Umgebung (5) angeordneten Elektromotor (2), wobei der Elektromotor (2) ein Gehäuse (4), welches einen Innenraum des Elektromotors gegenüber einer Umgebung des Motors abdichtet und einen in dem Gehäuse (4) angeordneten Stator und einem diesem Stator gegenüber drehbeweglichen Rotor aufweist, sowie eine mit diesem Rotor (24) gekoppelte Abtriebswelle (8), welche sich durch eine Wandung des Gehäuses (4) erstreckt und eine Lagerungseinrichtung (18), welche die Abtriebswelle (8) drehbar gegenüber dem Gehäuse (4) lagert. Erfindungsgemäß weist der Elektromotor eine erste Dichtungseinrichtung (12) auf, welche die Abtriebswelle (8) gegenüber dem Gehäuse (4) abdichtet, sowie eine zweite Dichtungseinrichtung (14), welche die Abtriebswelle gegenüber dem Gehäuse (4) abdichtet, wobei die erste Dichtungseinrichtung (12) und die zweite Dichtungseinrichtung (14) in einer Längsrichtung (L) der Abtriebswelle (8) voneinander beabstandet sind und zwischen den Dichtungseinrichtungen (12, 14) ein Hohlraum (16) ausgebildet ist.

## Beschreibung

Die vorliegende Erfindung bezieht sich auf einen Elektromotor für eine Vorrichtung zum Verschließen von Verschlüssen und auf eine Vorrichtung zum Verschließen von Verschlüssen. Es wird jedoch darauf hingewiesen, dass der erfindungsgemäße Elektromotor auch auf andere Vorrichtungen und insbesondere solche Vorrichtungen, in denen er in einem gasgefüllten Raum angeordnet ist, Anwendung finden kann.

Im Bereich der getränkeherstellenden Industrie finden in vielen Bereichen Elektromotoren Anwendung, beispielsweise für Vorrichtungen zum Verschließen von Behältnissen mit Verschlüssen. Dabei treiben diese Elektromotoren üblicherweise einen Verschlusskopf an, der die Behältnisse mit den Verschlüssen verschließt. Derartige Elektromotoren können jedoch auch in anderen Bereichen, insbesondere der getränkeherstellenden Industrie, Anwendung finden.

Bei dem Einsatz derartiger Elektromotoren in mit Wasser oder Reinigungsmittel beaufschlagten Räumen besteht die Gefahr, dass es durch Temperaturunterschiede des Motors (dem Unterschied zwischen einer Kaltphase des Motors und einer bereits warm gelaufenen Phase des Motors) zu einem veränderten Innendruck des Motors kommt und dadurch die äußere Atmosphäre in den Motor eingezogen werden kann. Ist diese Atmosphäre feucht oder mit aggressiven Reinigungsmitteln behaftet, kann eine Zerstörung der elektrischen Bauteile des Motors eintreten. Hierbei ist es bekannt, dass zum Schutz des Elektromotors der Innenraum mit einem Überdruck beaufschlagt wird. Aus mikrobiologischen Gründen ist jedoch insbesondere in Reinräumen ein derartiger Überdruck nicht möglich, da beispielsweise durch Leckagen schon eine Keimung aus dem Motor heraus erfolgen kann.

Aus der Deutschen Patentschrift Nr. 568 793 ist ein Elektromotor mit einem gasdichten Gehäuse für Kältemaschinen bekannt. Dabei ist ein gasdicht gekapselter Elektromotor mit einem Innenraum vorgesehen, wobei der Innenraum durch eine Verbindungsleitung mit einem Innenraum mit niederem Druck einer zugehörigen Kälteanlage verbunden ist. Der Zweck dieser Vorgehensweise besteht darin, dass es möglich sein soll, den Motor von der Anlage abzunehmen und durch einen anderen zu ersetzen, ohne dass man vorher aus der Kälteanlage das Kältemittel entfernen muss.

Aus der Deutschen Patentschrift 609 425 ist eine aus einer hohlkegelförmigen Schleuderscheibe und einem Ejektor bestehende Einrichtung zum Absaugen von in einem unter Flüssigkeiten arbeitenden Elektromotor eingedrungener Flüssigkeit bekannt. Dabei bezieht sich diese Druckschrift auf unter Flüssigkeiten elektrisch arbeitende Pumpen und dieser Druckschrift liegt die Aufgabe zugrunde, eingedrungene Leckflüssigkeiten aus einem Elektromotor abzusaugen. Damit unterscheidet sich jedoch das Anwendungsgebiet für den in dieser Druckschrift beschriebenen Elektromotor deutlich von dem Anwendungsgebiet für die vorliegenden Motoren. Die vorliegenden Elektromotoren sollen in luft- oder gasgefüllten Räumen angewandt werden, in denen gleichwohl Flüssigkeitsspritzer auftreten können.

Aus der Deutschen Patentanmeldung Nr. 1 190 794 ist eine elktromotorisch angetriebene Tauchpumpe für Abwässer und dergleichen bekannt. Dabei soll die Bauweise einer für verschiedenartige Fördermittel bestimmten Tauchpumpe vereinfacht werden.

Der vorliegenden Erfindung liegt die Aufgabe zugrunde, einen Elektromotor und eine Vorrichtung zum Verschließen von Behältnissen zur Verfügung zu stellen, welche einen verbesserten Schutz für den Motor und insbesondere die elektrischen Komponenten des Motors ermöglicht.

Dies wird erfindungsgemäß durch eine Vorrichtung zum Verschließen von Behältnissen nach Anspruch 1 und einen Elektromotor nach Anspruch 12 erreicht. Vorteilhafte Ausführungsformen und Weiterbildungen sind Gegenstand der Unteransprüche.

Eine erfindungsgemäße Vorrichtung zum Verschließen von Behältnissen mit Verschlüssen weist einen in einer im Wesentlichen gasförmigen Umgebung angeordneten Elektromotor auf, wobei der Elektromotor ein Gehäuse aufweist, welches einen Innenmotor des Elektromotors gegenüber einer Umgebung des Motors abdichtet. Weiterhin weist der Elektromotor einen in dem Gehäuse angeordneten Stator und einen diesem Stator gegenüberliegenden drehbeweglichen Rotor auf sowie eine mit diesem Rotor gekoppelte Abtriebswelle, welche sich durch eine Wandung des Gehäuses erstreckt. Daneben ist auch eine Lagerungseinrichtung vorgesehen, welche die Abtriebswelle gegenüber dem Gehäuse lagert.

Erfindungsgemäß weist der Elektromotor eine erste Dichtungseinrichtung auf, welche die Abtriebswelle gegenüber dem Gehäuse abdichtet sowie eine zweite Dichtungseinrichtung, welche die Abtriebswelle gegenüber dem Gehäuse abdichtet, wobei die erste Dichtungseinrichtung und die zweite Dichtungseinrichtung in einer Längsrichtung der Abtriebswelle voneinander beabstandet sind und zwischen den Dichtungseinrichtungen ein Hohlraum ausgebildet ist.

Damit wird bei der erfindungsgemäßen Ausführungsform bewusst ein Hohlraum ausgebildet, der als Pufferhohlraum für eventuell in das Gehäuse eintretende Gase oder auch Flüssigkeiten dienen kann. Bevorzugt ist wenigstens eine dieser Dichtungseinrichtungen stationär gegenüber dem Gehäuse angeordnet. Bevorzugt kontaktieren die Dichtungseinrichtungen vollumfänglich die Abtriebswelle.

Vorzugsweise ist der Rotor in einem Aufnahmeraum bzw. Innenraum des Gehäuses angeordnet und dieser Aufnahmeraum ist durch die erste Dichtungseinrichtung von dem Hohlraum getrennt. Damit wird durch eine der beiden Dichtungseinrichtungen ein Eintreten von Substanzen in den Hohlraum verhindert bzw. vermindert und die andere Dichtungseinrichtung bewirkt, dass gleichwohl in von den Hohlraum gelangte Substanzen nicht in den Innenraum des Elektromotors gelangen können.

Vorzugsweise ist in dem Hohlraum ein gasförmiges Medium angeordnet und dieses gasförmige Medium steht unter einem geringeren Druck als ein Medium in der Umgebung des Motors, d.h. demjenigen Raum, in dem der Elektromotor in seiner Gesamtheit angeordnet ist. Bei dieser Umgebung kann es sich beispielsweise um einen Sterilraum handeln, in dem der Elektromotor angeordnet ist. Damit können, falls gasförmige Medien in den Hohlraum eindringen, diese aufgrund der Druckverhältnisse nicht in den Innenraum des Motors gelangen. Vorzugsweise steht der Hohlraum auch unter einem geringeren Druck als der Innenraum des Elektromotors, d.h. der Raum, in dem der Stator des Elektromotors angeordnet ist. Mit anderen Worten steht hier der Innenraum des Motors unter einem Überdruck.

Vorzugsweise weist der Elektromotor einen Kanal für ein gasförmiges Medium auf und dieser Kanal steht in Strömungsverbindung mit dem Hohlraum. Damit kann über diesen besagten Kanal aus dem Hohlraum das gasförmige Medium abgesaugt werden. Vorzugsweise ist dieser besagte Kanal innerhalb des Gehäuses angeordnet und führt zu einer Außenwandung des Gehäuses, so dass von außen durch diesen Kanal aus dem Hohlraum das gasförmige Medium abgesaugt werden kann. Vorzugsweise ist der Kanal vollständig ausserhalb des Aufnahmeraums bzw. Innenraums des Elektromotors angeordnet.

Bei einer weiteren vorteilhaften Ausführungsform weist der Elektromotor eine dritte Dichtungseinrichtung auf, welche die Abtriebswelle gegenüber dem Gehäuse abdichtet und welche in Längsrichtung eine Abtriebswelle näher an der Umgebung des Elektromotors angeordnet ist als die erste und zweite Dichtungseinrichtung. Damit ist diese dritte Dichtungseinrichtung weiter von Stator und Rotor in der Längsrichtung der Abtriebswelle beabstandet als die erste und zweite Dichtungseinrichtung. Diese dritte Dichtungseinrichtung fungiert bevorzugt als Spritzwasserdichtung, welche das Eintreten von Spritzwasser in den Gehäusebereich des Motors verhindert.

Bei einer weiteren vorteilhaften Ausführungsform ist an der Abtriebswelle ein Verschlusskopf angeordnet, um Behältnisverschlüsse auf Mündungen der Behältnisse zu schrauben.

Bei einer weiteren vorteilhaften Ausführungsform handelt es sich wenigstens bei der ersten Dichtungseinrichtung oder der zweiten Dichtungseinrichtung und besonders bevorzugt bei beiden Dichtungseinrichtungen je um einen Wellendichtring. Dabei weist besonders bevorzugt die erste Dichtungseinrichtung einen sich in der Längsrichtung der Abtriebswelle in Richtung der Umgebung verjüngenden Querschnitt auf. Durch diese Anordnung der Dichtung kann effizient ein Eintreten von gasförmigen Medien in den Innenraum bzw. Aufnahmeraum des Motors verhindert werden.

Vorzugsweise weist auch die zweite Dichtungseinrichtung einen sich in der Längsrichtung der Abtriebswelle in Richtung der Umgebung verjüngenden Querschnitt auf. Auch durch diese Anordnung der zweiten Dichtungseinrichtung wird damit erreicht, dass gasförmige Medien nicht in den Hohlraum eintreten können. Weiterhin erlaubt die Anordnung der beiden Wellendichtringe, dass ein gasförmiges Medium von dem Motor in den Hohlraum austreten kann, was beispielsweise in einem erwärmten Zustand des Motors möglich ist.

Bei einer weiteren vorteilhaften Ausführungsform ist die Vorrichtung in einem Gehäuse angeordnet und der Elektromotor ist vollständig innerhalb dieses Gehäuses angeordnet. Dies bedeutet, dass der Elektromotor permanent entsprechenden Gasen in dem Gehäuse, wie beispielsweise Desinfektionsmedien, ausgesetzt ist und die erfindungsgemäße Anordnung um das Eintreten dieser Gase in das Innere des Motors verhindern.

Vorzugsweise weist die Vorrichtung eine Absaugeinrichtung auf, um aus dem Hohlraum ein Medium abzusaugen. Bei diesem Medium kann es sich beispielsweise um ein aus der Umgebung eingetretenes Desinfektionsmittel oder dergleichen handeln. Die vorliegende Erfindung ist weiterhin auf einen Elektromotor, insbesondere für eine Vorrichtung zum Verschließen von Behältnissen mit Verschlüssen gerichtet, wobei dieser Elektromotor ein Gehäuse aufweist, welches einen Innenraum des Elektromotors gegenüber einer Umgebung des Elektromotors abdichtet und wobei der Elektromotor einen in dem Gehäuse angeordneten Stator und einen diesem Stator gegenüber beweglichen Rotor aufweist sowie eine mit diesem Rotor gekoppelte Abtriebswelle, welche sich durch eine Wandung des Gehäuses erstreckt. Weiterhin weist der Motor eine Lagerungseinrichtung auf, welche die Abtriebswelle drehbar gegenüber dem Gehäuse lagert. Erfindungsgemäß weist der Elektromotor eine erste Dichtungseinrichtung auf, welche die Abtriebswelle gegenüber dem Gehäuse abdichtet sowie eine zweite Dichtungseinrichtung, welche die Abtriebswelle gegenüber dem Gehäuse abdichtet, wobei die erste Dichtungseinrichtung und die zweite Dichtungseinrichtung in einer Längsrichtung der Abtriebswelle voneinander beabstandet sind und zwischen den Dichtungseinrichtungen, insbesondere in der Längsrichtung der Abtriebswelle, ein Hohlraum ausgebildet ist.

Bei einer vorteilhaften Ausführungsform ist in dem Gehäuse ein Kanal vorgesehen, der in Strömungsverbindung mit dem besagten Hohlraum steht.

Weitere Vorteile und Ausführungsformen ergeben sich aus den beigefügten Zeichnungen:

Darin zeigen:
- Fig. 1: Eine schematische Darstellung einer Vorrichtung zum Verschließen von Behältnissen mit Verschlüssen; und
- Fig. 2: eine schematische Darstellung eines erfindungsgemäßen Elektromotors.

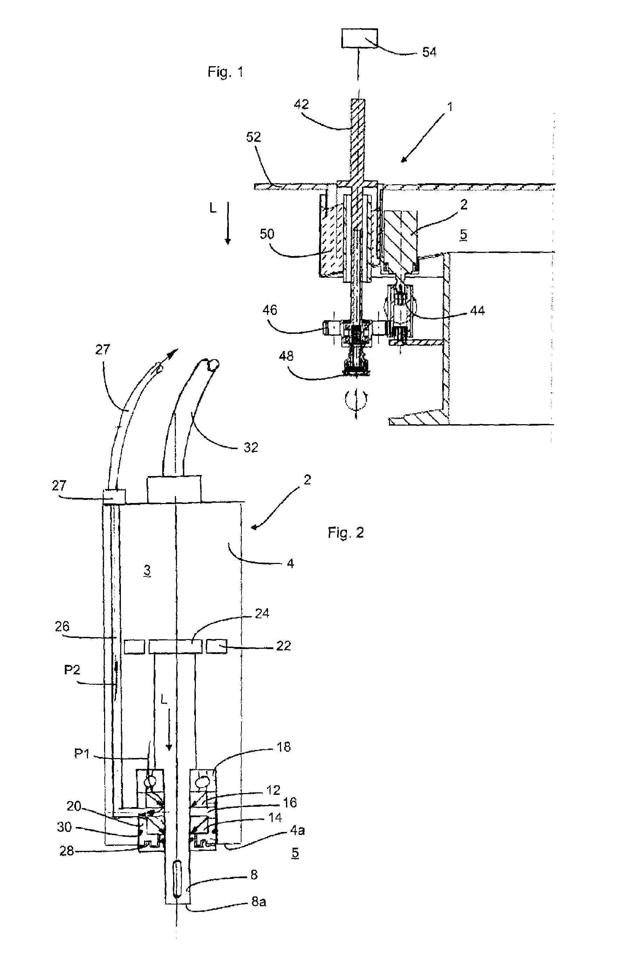

Fig. 1 zeigt eine teilweise Darstellung einer erfindungsgemäßen Vorrichtung 1 zum Verschließen von Behältnissen. Diese Vorrichtung weist dabei einen Verschlusskopf 48 zum Anbringen von Verschlüssen an Behältnissen auf. Dieser Verschlusskopf 48 ist über eine Stange 42 , die hier an eine Führungskurve 54 gekoppelt ist, in einer Längsrichtung L beweglich. Dabei ist der Verschlusskopf 48 permanent innerhalb eines Sterilraums 5 angeordnet. In diesem Sterilraum 5 befinden sich üblicherweise auch gasfömige Medien zum Sterilisieren der Anlage. Eine Wandung 52 grenzt den Sterilraum 5 gegenüber der Außenumgebung ab. Weitere den Sterilraum abgrenzende Wandungen sind in Fig. 1 nicht gezeigt. Die Führungskurve 54 ist dabei außerhalb des Sterilraums 5 angeordnet.

Eine Drehung dieses Verschlusskopfes 48 wird über einen Elektromotor 2 verursacht, wobei dieser Elektromotor 2 vollständig innerhalb des Sterilraums 5 angeordnet ist. Dieser Sterilraum 5 bildet damit gleichzeitig eine Umgebung des Elektromotors 2. Eine Abtriebwelle des Elektromotors 2 treibt ein Antriebsrad 44 an, welches wiederum mit einem angetriebenen Rad 46 zusammenwirkt. Dabei ist dieses angetriebene Rad 46 in der Längsrichtung gegenüber dem Antriebsrad 44 bewegbar, bleibt jedoch trotz bzw. während dieser Bewegung mit dem Antriebsrad 44 in Eingriff.

Fig. 2 zeigt einen erfindungsgemäßen Elektromotor 2. Dieser Elektromotor 2 weist dabei ein Gehäuse 4 auf, welches einen Innenraum 3 des Elektromotors 2 gegenüber der Umgebung 5 abdichtet. Weiterhin sind in dem Gehäuse 4 bzw. dem Innenraum 3 ein nur schematisch dargestellter Stator 22 sowie ein drehbeweglich mit diesem Stator zusammenwirkender Rotor 24 angeordnet. Über diesen Rotor 24 wird eine Abtriebswelle 8 angetrieben, welche sich durch eine Wandung 4a des Gehäuses 4 nach außen erstreckt. An der Abtriebswelle 8 kann das in Fig. 1 gezeigte Antriebsrad 44 angeordnet sein.

Das Bezugszeichen 18 bezieht sich auf eine Lagerungseinrichtung wie ein Kugellager, welches die Abtriebswelle 8 gegenüber dem Gehäuse 4 drehbeweglich lagert. In einer Längsrichtung L der Abtriebswelle 8 unterhalb der Lagerungseinrichtung 18 ist eine erste Dichtungseinrichtung 12 angeordnet, welche die Abtriebswelle 8 gegenüber dem Gehäuse 4 abdichtet.

In Längsrichtung L ist beabstandet zu dieser ersten Dichtungseinrichtung eine zweite Dichtungseinrichtung 14 angeordnet, welche ebenfalls die Abtriebswelle 8 gegenüber dem Gehäuse 4 abdichtet. In der Längsrichtung L unterhalb dieser zweiten Dichtungseinrichtung bzw. näher an dem unteren Ende 8a der Abtriebswelle 8 ist eine dritte Dichtungseinrichtung 28 angeordnet, welche hier als Labyrinthdichtung ausgebildet ist.

Damit wird die Abdichtung der Motorwelle bzw. Abtriebswelle 8 so gestaltet, dass von außen her die dritte Dichtungseinrichtung 28 Spritzwasser abhält. Es folgen dann zwei Dichtungseinrichtungen 14, 12 in Form von Wellendichtringen, die so angeordnet sind, dass zwischen der ersten Dichtungseinrichtung 12 und der zweiten Dichtungseinrichtung 14 ein Hohlraum bzw. Zwischenraum 16 ausgebildet wird. Wird dieser Hohlraum 16 unter leichten Unterdruck gesetzt, so entsteht in dem Motorinnenraum 3 durch Erwärmung und Abkühlung kein unterschiedlicher Druck und das Eindringen von Reinigungsmedien wird verhindert. Der Pfeil P1 deutet eine Strömungsrichtung an, wobei beispielsweise aus dem Motorinnenraum 3 Luft über die Lagereinrichtung 18 und die erste Dichtungseinrichtung 12 in den Hohlraum 16 gelangen kann.

Das Bezugszeichen 26 bezieht sich auf einen Kanal, der im Inneren des Gehäuses 4 angeordnet ist, und über welchen über einen Anschluss 27 und eine (nicht gezeigte) Absaugeinrichtung der Hohlraum 16 entleert werden kann. Das Bezugszeichen P2 bezieht sich auf die Strömungsrichtung im Inneren des Kanals 26 Das Bezugszeichen 32 bezieht sich auf ein Stromkabel zum Zuführen von elektrischer Energie.

Dabei sind hier die beiden Dichtungseinrichtungen so montiert, dass die zweite Dichtungseinrichtung 14 von außen nach innen schließt. Die erste Dichtungseinrichtung 12 öffnet hingegen vom Motorinnenraum zu dem besagten Hohlraum 16.

Es wäre jedoch auch möglich, dass die erste Dichtungseinrichtung 12 in Fig. 2 von oben nach unten schließt. Daneben wäre es auch möglich, dass die zweite Dichtungseinrichtung 14 von oben nach unten schließt, um so wirkungsvoller ein Eintreten von Medien von außen in den Hohlraum 16 zu verhindern.

Das Bezugzeichen 20 bezieht sich auf einen Einsatzkörper, in dem die einzelnen Dichtungseinrichtungen 12, 14 und 28 angeordnet sind. Dieser Einsatzkörper 20 ist bevorzugt von dem Gehäuse 8 demontierbar. Auf diese Weise kann einfach eine Auswechslung einzelner Dichtungseinrichtungen oder auch des gesamten Einsatzkörpers 20 erfolgen. Über ein weiteres Dichtmittel 30 ist dieser Einsatzkörper 20 gegenüber dem Gehäuse 4 abgedichtet. Es wäre weiterhin möglich, auch die Lagereinrichtung 18 an dem Einsatzkörper 20 anzuordnen, damit auch diese durch ein Entfernen des Einsatzkörpers 20 leicht ausgewechselt werden kann.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung zum Verschließen von Behältnissen (10) mit Verschlüssen, mit einem in einer gasförmigen Umgebung (5) angeordneten Elektromotor (2), wobei der Elektromotor (2) ein Gehäuse (4), welches einen Innenraum (3) des Elektromotors (2) gegenüber der Umgebung (5) des Elektromotors (2) abdichtet und einen in dem Gehäuse (4) angeordneten Stator (22) und einen diesem Stator (22) gegenüber drehbeweglichen Rotor (24) sowie eine mit diesem Rotor (24) gekoppelte Abtriebswelle (8) aufweist, welche Abtriebswelle (28) sich durch eine Wandung des Gehäuses (4) erstreckt und mit einer Lagerungseinrichtung (18), welche die Abtriebswelle (8) drehbar gegenüber dem Gehäuse (4) lagert,
**dadurch gekennzeichnet, dass**
der Elektromotor eine erste Dichtungseinrichtung (12) aufweist, welche die Abtriebswelle (8) gegenüber dem Gehäuse (4) abdichtet, sowie eine zweite Dichtungseinrichtung (14), welche die Abtriebswelle gegenüber dem Gehäuse (4) abdichtet, wobei die erste Dichtungseinrichtung (12) und die zweite Dichtungseinrichtung (14) in einer Längsrichtung der Abtriebswelle (8) voneinander beabstandet sind und zwischen den Dichtungseinrichtungen (12, 14) ein Hohlraum (16) ausgebildet ist.

2. Vorrichtung nach Anspruch 1,
**dadurch gekennzeichnet, dass**
der Rotor in einem Aufnahmeraum des Gehäuses (8) angeordnet ist und dieser Aufnahmeraum durch die erste Dichtungseinrichtung (12) von dem Hohlraum (16) getrennt ist.

3. Vorrichtung nach Anspruch 1,
**dadurch gekennzeichnet, dass**
in dem Hohlraum (16) ein gasförmiges Medium angeordnet ist und dieses gasförmige Medium unter einem geringeren Druck steht als ein Medium in dem Innenraum (3) des Elektromotors (2).

4. Vorrichtung nach wenigstens einem der vorangegangenen Ansprüche,
**dadurch gekennzeichnet, dass**
der Elektromotor (2) einen Kanal (26) für ein gasförmiges Medium aufweist und dieser Kanal (26) in Strömungsverbindung mit dem Hohlraum (16) steht.

5. Vorrichtung nach wenigstens einem der vorangegangenen Ansprüche,
**dadurch gekennzeichnet, dass**
der Elektromotor eine dritte Dichtungseinrichtung (28) aufweist, welche die Abtriebswelle (8) gegenüber dem Gehäuse (4) abdichtet und welche in der Längsrichtung (L) der Abtriebswelle (8) näher an der Umgebung des Elektromotors (2) angeordnet ist als die erste und die zweite Dichtungseinrichtung (12, 14).

6. Vorrichtung nach wenigstens einem der vorangegangenen Ansprüche,
**dadurch gekennzeichnet, dass**
an der Abtriebswelle (8) ein Verschlusskopf angeordnet ist, um Behältnisverschlüsse auf Mündungen der Behältnisse zu schrauben.

7. Vorrichtung nach wenigstens einem der vorangegangenen Ansprüche,
**dadurch gekennzeichnet, dass**
wenigstens die erste Dichtungseinrichtung (12) oder die zweite Dichtungseinrichtung (14) ein Wellendichtring ist.

8. Vorrichtung nach wenigstens einem der vorangegangenen Ansprüche,
**dadurch gekennzeichnet, dass**
die erste Dichtungseinrichtung (12) einen sich in der Längsrichtung (L) der Abtriebwelle in Richtung der Umgegbung verjüngenden Querschnitt aufweist.

9. Vorrichtung nach wenigstens einem der vorangegangenen Ansprüche,
**dadurch gekennzeichnet, dass**
die zweite Dichtungseinrichtung (14) einen sich in der Längsrichtung (L) der Abtriebwelle in Richtung der Umgegbung verjüngenden Querschnitt aufweist.

10. Vorrichtung nach wenigstens einem der vorangegangenen Ansprüche,
**dadurch gekennzeichnet, dass**
die Vorrichtung (1) in einem Gehäuse angeordnet ist und der Elektromotor (2) vollständig innerhalb dieses Gehäuses angeordnet ist.

11. Vorrichtung nach wenigstens einem der vorangegangenen Ansprüche,
**dadurch gekennzeichnet, dass**
die Vorrichtung eine Absaugeinrichtung aufweist, um aus dem Hohlraum (16) ein Medium abzusaugen.

12. Elektromotor (2), insbesondere für eine Vorrichtung zum Verschließen von Behältnissen mit Verschlüssen, mit einem Gehäuse (4), welches einen Innenraum (3) des Elektromotors (2) gegenüber einer Umgebung des Motors abdichtet, mit einem in dem Gehäuse (4) angeordneten Stator (22) und einem diesem Stator (22) gegenüber drehbeweglichen Rotor (24) sowie einer mit diesem Rotor gekoppelten Abtriebswelle (8), welche sich durch eine Wandung des Gehäuses (4) erstreckt und mit einer Lagerungseinrichtung (18), welche die Abtriebswelle (8) drehbar gegenüber dem Gehäuse (4) lagert,
**dadurch gekennzeichnet, dass**
der Elektromotor (2) eine erste Dichtungseinrichtung (12) aufweist, welche die Abtriebswelle (8) gegenüber dem Gehäuse (4) abdichtet, sowie eine zweite Dichtungseinrichtung (14), welche die Abtriebswelle gegenüber dem Gehäuse (4) abdichtet, wobei die erste Dichtungseinrichtung (12) und die zweite Dichtungseinrichtung (14) in einer Längsrichtung (L) der Abtriebswelle (8) voneinander beabstandet sind und zwischen den Dichtungseinrichtungen (12, 14) ein Hohlraum (16) ausgebildet ist.

13. Elektromotor nach Anspruch 12,
**dadurch gekennzeichnet, dass**
in dem Gehäuse ein Kanal (26) vorgesehen ist, der in Strömungsverbindung mit dem Hohlraum (16) steht.
